# EUROPÄISCHE PATENTSCHRIFT

(11) **EP 2 951 912 B1**
(45) Veröffentlichungstag und Bekanntmachung des Hinweises auf die Patenterteilung: **04.07.2018**
(21) Anmeldenummer: 14712186.7
(22) Anmeldetag: 28.02.2014
(51) Int. Cl.: H02M 3/155, H02M 1/00, H02M 7/48

(54) **VERFAHREN ZUM REGELN EINES WECHSELRICHTERS UND WECHSELRICHTER**
METHOD FOR REGULATING AN INVERTER, AND INVERTER
PROCÉDÉ DE RÉGLAGE D'UN ONDULEUR ET ONDULEUR

(30) Priorität: 05.03.2013 AT 501452013
(43) Veröffentlichungstag der Anmeldung: 09.12.2015
(73) Patentinhaber: Fronius International GmbH, 4643 Pettenbach (AT)
(72) Erfinder: ACHLEITNER, Günter, A-4642 Sattledt (AT); ARTELSMAIR, Bernhard, A-4643 Pettenbach (AT); PAMER, Andreas, A-4702 Wallern a.d. Trattnach (AT)
(74) Vertreter: Sonn & Partner Patentanwälte
(86) Internationale Anmeldenummer: PCT/AT2014/050046
(87) Internationale Veröffentlichungsnummer: WO 2014/134647

(56) Entgegenhaltungen:
- DE-A1- 10 218 305
- US-A- 5 172 309
- US-A1- 2007 247 123
- GANESH ARUN ET AL: "Improved Active Power-Factor-Correction Circuit Using a Zero-Voltage-Switching Boost Converter", IEEE TRANSACTIONS ON POWER ELECTRONICS, INSTITUTE OF ELECTRICAL AND ELECTRONICS ENGINEERS, USA, Bd. 13, Nr. 2, 1. März 1998 (1998-03-01), XP011043146, ISSN: 0885-8993
- KUI-JUN LEE ET AL: "Nonisolated ZVT Two-Inductor Boost Converter With a Single Resonant Inductor for High Step-Up Applications", IEEE TRANSACTIONS ON POWER ELECTRONICS, INSTITUTE OF ELECTRICAL AND ELECTRONICS ENGINEERS, USA, Bd. 27, Nr. 4, 1. April 2012 (2012-04-01), Seiten 1966-1973, XP011422901, ISSN: 0885-8993, DOI: 10.1109/TPEL.2011.2165970

## Beschreibung

Die Erfindung betrifft ein Verfahren zum Regeln eines Wechselrichters nach dem Oberbegriff des Anspruchs 1 und einen Wechselrichter, insbesondere einen Photovoltaikwechselrichter, nach dem Oberbegriff des Anspruchs 3.

Die US 2007/247123 A1 beschreibt einen Wechselrichter für eine dreiphasige DC/AC-Stufe zur Ansteuerung eines elektrischen Motors ohne Entlastungsschaltung zur Entlastung des Hauptschalters des Wechselrichters.

GANESH ARUN ET AL: "Improved Active Power-Factor-Correction Circuit Using a Zero-Voltage-Switching Boost Converter",IEEE TRANSACTIONS ON POWER ELECTRONICS, INSTITUTE OF ELECTRICAL AND ELECTRONICS ENGINEERS beschreibt einen Aufwärtswandler mit einer Entlastungsschaltung zum Entlasten des Hauptschalters.

Die Aufgabe der Erfindung besteht darin, eine Schaltentlastung des Hauptschalters zu erzielen und somit einen höheren Wirkungsgrad und Leistungsdichte zu erreichen.

Gelöst wird die Aufgabe durch ein Verfahren zum Regeln eines Wechselrichters mit einer DC/DC Stufe mit zumindest einem Hauptschalter, einem Zwischenkreis und einer DC/AC Stufe, wobei eine Entlastungsschaltung zwischen dem Hauptschalter und dem Mittelpunkt zweier in Serie geschalteter Kondensatoren im Zwischenkreis, an welchen Kondensatoren die Zwischenkreisspannung und an deren Mittelpunkt eine Teilspannuing der Zwischenkreisspannung anliegt, angeordnet wird, und durch eine bidirektionale Schaltung zweier Schalter und einer Induktivität in Serie gebildet wird, und die Zwischenkreisspannung am Ausgang der DC/DC-Stufe und die Teilspannung erfasst wird, und die Schalter der Entlastungsschaltung derart geregelt werden, dass abwechselnd ein Schalter eingeschaltet wird, und der erste Schalter (SA1) eingeschaltet wird, nachdem die Spannung am Hauptschalter (S2) die Zwischenkreisspannung (Uz) erreicht hat, und der Hauptschalter spannungsfrei eingeschaltet wird, nachdem die Spannung am Hauptschalter auf Null gesunken ist, und der Einschaltzeitpunkt des zweiten Schalters vor einem Ausschalten des Hauptschalters in Abhängigkeit eines Verhältnisses der Zwischenkreisspannung zur Teilspannung festgelegt wird.

Die Aufgabe wird auch gelöst durch einen Wechselrichter mit einer DC/DC-Stufe mit zumindest einem Hauptschalter, einem Zwischenkreis und einer DC/AC Stufe, bei dem eine Entlastungsschaltung zur Entlastung des Hauptschalters vorgesehen ist, wobei die Entlastungsschaltung zwischen dem Hauptschalter und dem Mittelpunkt zweier in Serie geschalteter Kondensatoren im Zwischenkreis, an welchen Kondensatoren die Zwischenkreisspannung und an deren Mittelpunkt eine Teilspannung der Zwischenkreisspannung anliegt, angeordnet ist, und durch eine bidirektionale Schaltung zweier Schalter und einer Induktivität in Serie gebildet ist, und eine Einrichtung zur Regelung der Schalter der Entlastungsschaltung vorgesehen ist, und Mittel, die eingerichtet sind, die Zwischenkreisspannung (Uz) und die Teilspannung (Uzt) der Zwischenkreisspannung (Uz) zu erfassen, vorgesehen sind, und die Regelungseinrichtung derart ausgebildet ist, dass abwechselnd ein Schalter eingeschaltet wird, und der erste Schalter (SA1) eingeschaltet wird, nachdem die Spannung am Hauptschalter (S2) die Zwischenkreisspannung (Uz) erreicht hat, und der Hauptschalter spannungsfrei eingeschaltet wird, nachdem die Spannung am Hauptschalter auf Null gesunken ist, und der zweite Schalter eingeschaltet wird, bevor der Hauptschalter ausgeschaltet wird in Abhängigkeit eines Verhältnisses der Zwischenkreisspannung zur Teilspannung.

Vorteilhaft ist hierbei, dass die Bereitstellung einer für die Entlastungsschaltung notwendigen Hilfsspannungsquelle ohne zusätzliche Bauelemente erfolgt, sodass die Verluste und Kosten minimal gehalten werden. Entsprechend wirkt sich dies positiv auf den Wirkungsgrad aus. Des Weiteren kann dadurch eine symmetrische Verteilung der Spannungen an den Kondensatoren/Elkos im Zwischenkreis erreicht werden, wodurch ebenfalls der Wirkungsgrad verbessert wird.

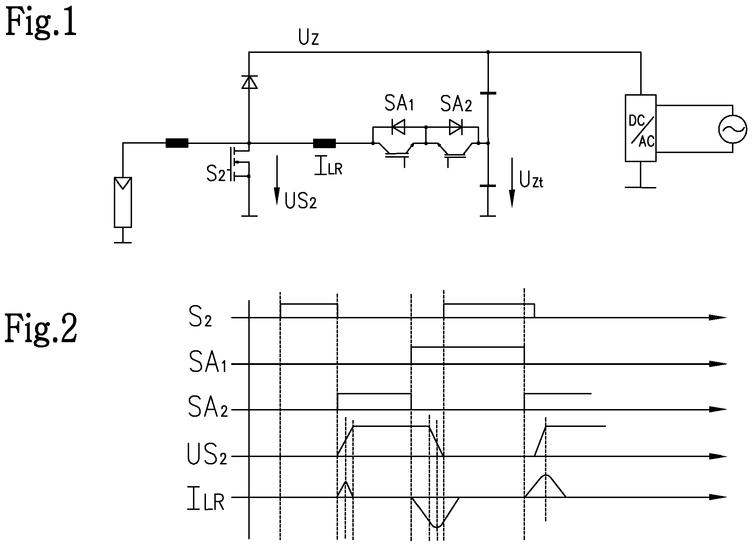

Die erfindungsgemäße Schaltung gemäß Fig. 1 ist nun im Folgenden beschrieben.

Die Grundschaltung ist entsprechend ein Hochsetzsteller, wobei am Ausgang zwei Kondensatoren bzw. Elektrolytkondensatoren in Serie geschaltet sind. Zwischen den Kondensatoren entsteht somit ein Ausgangsknotenpunkt. Es ist auch möglich, nur den unteren Kondensator zu verwenden. Die Entlastungsschaltung ist dabei zwischen dem Mittelpunkt und dem Knotenpunkt von Eingangsdrossel bzw. Eingangsinduktivität, Schalter S2 und Diode des Hochsetzstellers angeordnet. Die Eingangsdrossel wird entsprechend von zumindest einem Solargenerator bzw. Solarmodul versorgt.

Die Entlastungsschaltung umfasst dabei eine Serienschaltung einer Induktivität bzw. Drossel und einem bidirektionalen Schaltelement, umfassend die Schalter SA1 und SA2.

Am Ausgangsknotenpunkt wird dabei die Teilspannung Uzt abgegriffen, wobei über beide Kondensatoren die Zwischenkreisspannung Uz anliegt.

Am Knotenpunkt wird die Spannung Us2 abgegriffen, welche einen Einfluss auf das Regelverfahren hat. Des Weiteren ist auch der Strom durch die Drossel der Entlastungsschaltung ILr relevant. Die Drossel kann auch als Resonanzdrossel ausgeführt sein.

Das Regelverfahren wird nun anhand von Fig. 2 näher beschrieben.

Nach dem ersten Schaltzyklus vom Hauptschalter S2 - also nach dem Ausschalten - steigt die Spannung Us2 an, da die Eingangsdrossel über die Diode den Stromfluss aufrecht hält. Mit dem Ausschalten von S2 wird gleichzeitig SA2 eingeschaltet, wodurch der Strom ILR durch die Drossel der Entlastungsschaltung zu fließen beginnt. Nachdem die Us2 die Teilspannung Uzt erreicht hat, dreht sich der Strom ILR wieder um und sinkt auf null. Us2 bleibt entsprechend im Wesentlichen solange auf den Wert der Zwischenkreisspannung Uz, bis SA2 ausgeschaltet und SA1 eingeschaltet wird. Mit diesem Zeitpunkt beginnt sich die Drossel der Entlastungsschaltung in die Gegenrichtung aufzuladen, wie am Verlauf von ILR ersichtlich. Ebenso beginnt im Wesentlichen mit diesem Zeitpunkt die Spannung Us2 zu sinken und der Schalter SA1 wird eingeschaltet.

Nachdem Us2 auf null gesunken ist, kann der Hauptschalter S2 verlustfrei, also spannungsfrei, eingeschaltet werden, womit der nächste Zyklus beginnt. Innerhalb eines Zyklus ist die Energiebilanz von ILR relevant. Das heißt, es sollte die positive Halbwelle und die negative Halbwelle gleich sein, also in Summe null. Ist dies der Fall, beträgt die Teilspannung Uzt die Hälfte von Uz . Somit wäre das Verhältnis von Zwischenkreisspannung zu Teilspannung 2:1, welches gefordert ist. Ist dies nicht der Fall, wie dargestellt, hat Uzt einen höheren Wert.

Die Regelung ist also bestrebt, im nächsten Zyklus den Wert von Uzt zu senken. Dies wird erfindungsgemäß dadurch erreicht, indem SA2 eingeschaltet wird, bevor S2 ausgeschaltet wird. Dies bewirkt, dass die Drossel der Entlastungsschaltung länger geladen wird und entsprechend die Teilspannung Uzt sinkt.

Dementsprechend wird also der Einschaltzeitpunkt von SA2 in jedem Zyklus angepasst, bis sich das Verhältnis von 2:1 einstellt.

Somit werden die Spannungen an den Kondensatoren im Wesentlichen am selben Niveau gehalten. Die Differenz zwischen Einschaltzeitpunkt von SA2 und Ausschaltzeitpunkt von S2 wird also nach dem aktuellen Verhältnis von Uz zu Uzt angepasst. Die Differenz liegt je nach Schaltfrequenz im Bereich von einigen hundert ns. Die Regelgröße ist dabei die Differenzspannung von Uz zu Uzt. Selbstverständlich kann die Diode auch durch einen Schalter, wie beispielsweise MOSFETs, ersetzt werden.

Ebenso kann ILR auch als Regelgröße herangezogen werden, indem die Summe pro Zyklus auf null geregelt wird.

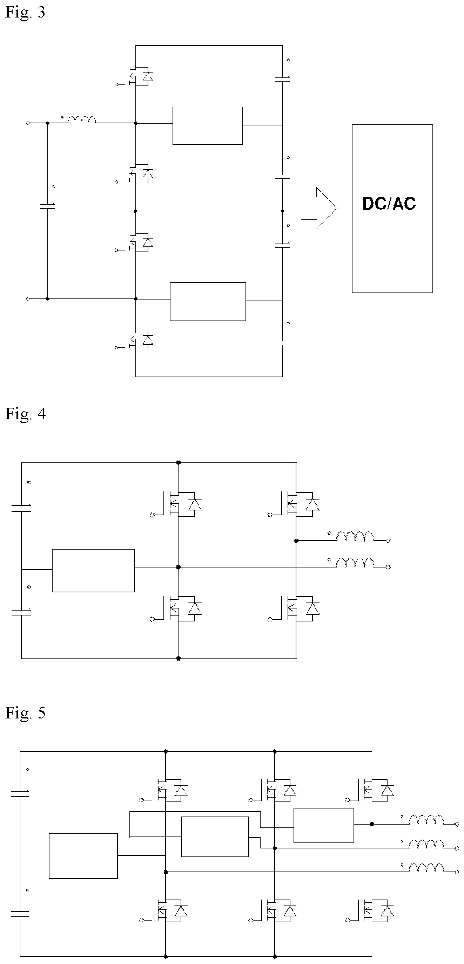

Beispielhaft ist dies in Fig. 3 dargestellt, welche eine Multilevel DC/DC-Stufe darstellt. Diese dient insbesondere für dreiphasige DC/AC-Stufen mit höheren Eingangsspannungsbereichen.

Wird die Entlastungsschaltung in einem Tiefsetzsteller eingesetzt, sind die Funktionen von SA1 und SA2 zu tauschen. Wenn, in einem Beispiel, der das Verständnis der Erfindung erleichtert, die Entlastungsschaltung in einer DC/AC-Stufe, wie eine Brückenschaltung, eingesetzt ist, wird die Funktion von SA1 und SA2 und deren Regelung in Abhängigkeit an die in diesem Augenblick verwendete Funktionsweise, also entweder Hochsetzsteller oder Tiefsetzsteller, angepasst.

In den folgenden Figuren sind noch DC/AC-Stufen gezeigt, welche mit der erfindungsgemäßen Schaltung kombiniert werden können. Die Blöcke stellen dabei die Entlastungsschaltung dar.

Fig. 4 zeigt eine einphasige DC/AC-Stufe mit einer H4 Brücke, welche beispielsweise in einem so genannten Mikroinverter direkt am Solarmodul eingesetzt werden kann.

Fig. 5 zeigt eine B6 Schaltung für dreiphasige DC/AC-Stufen.

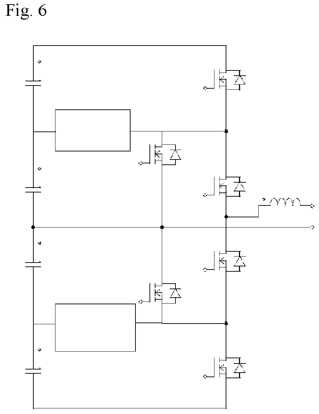

In Fig. 6 ist schließlich noch eine Schaltungstopologie für einphasige und dreiphasige DC/AC-Stufen gezeigt, wobei hier der Neutralleiter oder Sternpunkt auf der halben Zwischenkreisspannung hängt. Vorteilhaft ist hierbei ein so genannter ruhender Generator.

## Patentansprüche

1. Verfahren zum Regeln eines Wechselrichters mit einer DC/DC-Stufe mit zumindest einem Hauptschalter (S2), einem Zwischenkreis und einer DC/AC-Stufe, **dadurch gekennzeichnet, dass** der Hauptschalter (S2) durch eine Entlastungsschaltung entlastet wird, wobei die Entlastungsschaltung zwischen dem Hauptschalter (S2) und dem Mittelpunkt zweier in Serie geschalteter Kondensatoren im Zwischenkreis, an welchen Kondensatoren die Zwischenkreisspannung (Uz) und an deren Mittelpunkt eine Teilspannung (Uzt) der Zwischenkreisspannung (Uz) anliegt, angeordnet wird, und durch eine bidirektionale Schaltung zweier Schalter (SA1, SA2) und einer Induktivität in Serie gebildet wird, und die Zwischenkreisspannung (Uz) am Ausgang der DC/DC-Stufe und die Teilspannung (Uzt) erfasst wird, und die Schalter (SA1, SA2) der Entlastungsschaltung derart geregelt werden, dass abwechselnd ein Schalter (SA1, SA2) eingeschaltet wird, und der erste Schalter (SA1) eingeschaltet wird, nachdem die Spannung am Hauptschalter (S2) die Zwischenkreisspannung (Uz) erreicht hat, und der Hauptschalter (S2) spannungsfrei eingeschaltet wird, nachdem die Spannung (US2) am Hauptschalter (S2) auf Null gesunken ist, und der Einschaltzeitpunkt des zweiten Schalters (SA2) vor dem Ausschalten des Hauptschalters (S2) in Abhängigkeit eines Verhältnisses der Zwischenkreisspannung (Uz) zur Teilspannung (Uzt) festgelegt wird.

2. Verfahren nach Anspruch 1, **dadurch gekennzeichnet, dass** der Einschaltzeitpunkt des zweiten Schalters (SA2) vor dem Ausschalten des Hauptschalters (S2) in Abhängigkeit eines Verhältnisses der Zwischenkreisspannung (Uz) zur Teilspannung (Uzt) von 2:1 festgelegt wird .

3. Wechselrichter mit einer DC/DC-Stufe mit zumindest einem Hauptschalter (S2), einem Zwischenkreis und einer DC/AC-Stufe, **dadurch gekennzeichnet, dass** eine Entlastungsschaltung zur Entlastung des Hauptschalters (S2) vorgesehen ist, wobei die Entlastungsschaltung zwischen dem Hauptschalter (S2) und dem Mittelpunkt zweier in Serie geschalteter Kondensatoren im Zwischenkreis, an welchen Kondensatoren die Zwischenkreisspannung (Uz) und an deren Mittelpunkt eine Teilspannung (Uzt) der Zwischenkreisspannung anliegt, angeordnet ist, und durch eine bidirektionale Schaltung zweier Schalter (SA1, SA2) und einer Induktivität in Serie gebildet ist, und eine Einrichtung zur Regelung der Schalter (SA1, SA2) der Entlastungsschaltung vorgesehen ist, und Mittel, die eingerichtet sind, die Zwischenkreisspannung (Uz) und die Teilspannung (Uzt) der Zwischenkreisspannung (Uz) zu erfassen, vorgesehen sind, und die Regelungseinrichtung derart ausgebildet ist, dass abwechselnd ein Schalter (SA1, SA2) eingeschaltet wird, und der erste Schalter (SA1) eingeschaltet wird, nachdem die Spannung am Hauptschalter (S2) die Zwischenkreisspannung (Uz) erreicht hat, und der Hauptschalter (S2) spannungsfrei eingeschaltet wird, nachdem die Spannung (US2) am Hauptschalter (S2) auf Null gesunken ist, und der zweite Schalter (SA2) eingeschaltet wird, bevor der Hauptschalter (S2) ausgeschaltet wird in Abhängigkeit eines Verhältnisses der Zwischenkreisspannung (Uz) zur Teilspannung (Uzt) .

4. Wechselrichter nach Anspruch 3, **dadurch gekennzeichnet, dass** die DC/DC-Stufe ein Hochsetzsteller ist.

5. Wechselrichter nach Anspruch 3, **dadurch gekennzeichnet, dass** die DC/DC-Stufe ein Tiefsetzsteller ist.

## Claims

1. Method for controlling an inverter having a DC/DC stage comprising a main switch (S2), an intermediate circuit and a DC/AC stage, **characterised in that** the main switch (S2) is discharged by a discharge circuit, wherein the discharge circuit is arranged between the main switch (S2) and the center of two capacitors connected in series in the intermediate circuit, at which capacitors the intermediate circuit voltage (Uz) is applied and to the center of said capacitors a partial voltage (Uzt) of the intermediate circuit voltage (Uz) is applied, and being formed by a bidirectional circuit of two switches (SA1, SA2) and an inductivity in series, and the intermediate circuit voltage (Uz) at the output of the DC/DC stage and the partial voltage (Uzt) being detected, and the switches (SA1, SA2) of the discharge circuit being controlled such that a switch (SA1, SA2) is alternately switched on, and the first switch (SA1) is switched on after the voltage at the main switch (S2) has reached the intermediate circuit voltage (Uz), and the main switch (S2) is switched on voltage-free after the voltage (US2) at the main switch (S2) has dropped to zero, and the time at which the second switch (SA2) is switched on is fixed such that said switch is switched on before the main switch (S2) is switched off as a function of a relation of the intermediate circuit voltage (Uz) to the partial voltage (Uzt).

2. Method according to claim 1, **characterised in that** the time at which the second switch (SA2) is switched on is fixed such that said switch is switched on before the main switch (S2) is switched off as a function of a relation of the intermediate circuit voltage (Uz) to the partial voltage (Uzt) of 2:1.

3. Inverter having a DC/DC stage comprising at least one main switch (S2), an intermediate circuit and a DC/AC stage, **characterised in that** a discharge circuit is provided for discharging the main switch (S2), wherein the discharge circuit is arranged between the main switch (S2) and the center of two capacitors connected in series in the intermediate circuit, at which capacitors the intermediate circuit voltage (Uz) is applied and to the center of said capacitors a partial voltage (Uzt) of the intermediate circuit voltage (Uz) is applied, and being formed by a bidirectional circuit of two switches (SA1, SA2) and an inductivity in series, and a device for controlling the switches (SA1, SA2) of the discharge circuit and means that are designed to detect the intermediate circuit voltage (Uz) and the partial voltage (Uzt) of the intermediate circuit voltage (Uz) being provided, and the controlling device being formed such that a switch (SA1, SA2) is alternately switched on, and the first switch (SA1) is switched on after the voltage at the main switch (S2) has reached the intermediate circuit voltage (Uz), and the main switch (S2) is switched on voltage-free after the voltage (US2) at the main switch (S2) has dropped to zero, and the second switch (SA2) is switched on before the main switch (S2) is switched off as a function of a relation of the intermediate circuit voltage (Uz) to the partial voltage (Uzt).

4. Inverter according to claim 3, **characterised in that** the DC/DC stage is a boost converter.

5. Inverter according to claim 3, **characterised in that** the DC/DC stage is a buck converter.

## Revendications

1. Procédé de régulation d'un onduleur avec un étage DC/DC avec au moins un commutateur principal (S2), un circuit intermédiaire et un étage DC/AC, **caractérisé en ce que** le commutateur principal (S2) est déchargé par un circuit de décharge, le circuit de décharge étant disposé entre le commutateur principal (S2) et le point central de deux condensateurs branchés en série dans le circuit intermédiaire, la tension du circuit intermédiaire (Uz) étant appliquée à ces condensateurs et une tension partielle (Uzt) de la tension du circuit intermédiaire (Uz) étant appliquée à leur point central, et étant constitué d'un branchement bidirectionnel de deux commutateurs (SA1, SA2) et d'une inductance en série, et la tension du circuit intermédiaire (Uz) étant mesurée à la sortie de l'étage DC/DC et la tension partielle (Uzt) étant mesurée et les commutateurs (SA1, SA2) du circuit de décharge étant régulées de façon à ce que, en alternance, un commutateur (SA1, SA2) soit activé et le premier commutateur (SA1) soit activé une fois que la tension au niveau du commutateur principal (S2) a atteint la tension du circuit intermédiaire (Uz) et le commutateur principal (S2) est activé sans tension une fois que la tension (US2) au niveau du commutateur principal (S2) est tombée à zéro, et le moment de l'activation du deuxième commutateur (SA2) est déterminé avant la désactivation du commutateur principal (S2) en fonction d'un rapport entre la tension du circuit intermédiaire (Uz) et la tension partielle (Uzt).

2. Procédé selon la revendication 1, **caractérisé en ce que** le moment d'activation du deuxième commutateur (SA2) est déterminé avant la désactivation du commutateur principal (S2) en fonction d'un rapport entre la tension du circuit intermédiaire (Uz) et la tension partielle (Uzt) de 2:1.

3. Onduleur avec un étage DC/DC avec au moins un commutateur principal (S2), un circuit intermédiaire et un étage DC/AC, **caractérisé en ce qu'**un circuit de décharge est prévu pour la décharge du commutateur principal (S2), le circuit de décharge étant disposé entre le commutateur principal (S2) et le point central de deux condensateurs branchés en série dans le circuit intermédiaire, la tension du circuit intermédiaire (Uz) étant appliquée à ces condensateurs et une tension partielle (Uzt) de la tension du circuit intermédiaire (Uz) étant appliquée à leur point central, et étant constitué d'un branchement bidirectionnel de deux commutateurs (SA1, SA2) et d'une inductance en série, et un dispositif de régulation des commutateurs (SA1, SA2) du circuit de décharge étant prévu, et des moyens, qui sont conçus pour mesurer la tension du circuit intermédiaire (Uz) et la tension partielle (Uzt) de la tension du circuit intermédiaire (Uz), étant prévus et le dispositif de régulation étant conçu de façon à ce que, en alternance, un commutateur (SA1, SA2) soit activé et le premier commutateur (SA1) soit activé une fois que la tension au niveau du commutateur principal (S2) a atteint la tension du circuit intermédiaire (Uz) et le commutateur principal (S2) est activé sans tension une fois que la tension (US2) au niveau du commutateur principal (S2) est tombée à zéro et le deuxième commutateur (SA2) est activé avant que le commutateur principal (S2) soit désactivé en fonction d'un rapport entre la tension du circuit intermédiaire (Uz) et la tension partielle (Uzt).

4. Onduleur selon la revendication 3, **caractérisé en ce que** l'étage DC/DC est un convertisseur élévateur.

5. Onduleur selon la revendication 3, **caractérisé en ce que** l'étage DC/DC est un convertisseur abaisseur.
